# EUROPEAN PATENT APPLICATION

(11) **EP 3 582 160 A1**
(43) Date of publication of application: **18.12.2019**
(21) Application number: 19189863.4
(22) Date of filing: 23.10.2015
(51) Int. Cl.: G06Q 10/06

(54) **SYSTEM AND METHOD FOR FOLLOW-UP OF A BUILDING OR CONSTRUCTION PROJECT**

(30) Priority: 24.10.2014 SE 1451280
(62) Divisional of application: 15853279.6
(71) Applicant: RSG Stockholm AB, 131 30 Nacka (SE)
(72) Inventor: ANDERSON, Per, 111 29 Stockholm (SE)
(74) Representative: Noréns Patentbyrå AB

(57) **Abstract**

System (100) for a construction project (PR) comprising sub projects (SP1,SP2), in turn comprising work tasks (T11-T15,T21-T23), wherein a central server (130) communicates with mobile devices (120,121), wherein a software function is accessed from said devices, wherein the server associates the project with sub projects, the sub projects to work tasks and the tasks with performers, wherein the software function allows the performer to mark tasks as finalized.

The invention is characterised in that the server associates a task with a documentation requirement, seen as fulfilled when a digital media file of a particular type has been received and associated with the task, in that the software function allows the performer to produce the file and to communicate it to the server, and in that the server allows users to be assigned responsibility for a sub project and that such assigned users in turn can assign performers to perform sub project tasks and to provide documentation of such tasks.

## Description

The present invention relates to a system and a method for follow-up of a building or construction project. Moreover, the system and method of the invention is arranged to automate the acceptance process of such a project, and to automatically produce project documentation.

In the building and construction industries, projects typically have complex requirements regarding documentation, quality and timing. At the same time, many individual people may be involved in one single project, making it difficult to keep track of the progress, status and quality of all project sub parts, including any accrued problems.

For instance, in a project for refurnishing all bathrooms in a set of apartment blocks, many different roles (project managers, carpenters, water- and sanitation technicians, painters, electricians, etc.) are involved, and each individual work task, such as laying a particular floor, may involve several individual persons. Many persons work in the field in different locations. Each bathroom may share a certain set of properties with most of the other bathrooms, but certain details may be individual due to the detailed requirements in each apartment building. Furthermore, most work tasks are interrelated to other work tasks in complex ways, due to physical constraints making it impossible to perform one task before a previous one has been finalized, but also to other aspects such as logistical and financial constraints.

In order to organize such complex projects it has been proposed to use central planning tools, such as dynamic gantt diagrams, in order to achieve an overview understanding of the state and progress of the project.

However, a number of problems are still present.

Firstly, it is difficult to know what work tasks have been completed, to keep track of problems arising in individual work tasks and the consequences of such problems on other work tasks. Many unexpected problems need to be handled on a case by case basis, and miscommunication between workers often lead to workers showing up only to realize that it is not possible to perform the planned task at the moment.

Secondly, it is difficult to keep track of who is responsible for the finalization of which work task, not least after the finalization of a work task.

Thirdly, after a project has been finalized, documentation needs to be produced, both proving that the project actually delivered according to specification and providing additional information such as relevant user manuals, specifications, etc. This work is often time-consuming, not least because many of the above described problems need to be sorted out in the process.

CN 102118380 A discloses a system for adding handwritten signatures to digital documents.

CN 103577904 A discloses electronic signing by scanning a handwritten signature.

EP 2014424 A1 discloses a system for automatic tool tracking.

JP 2012141831 A discloses a system for follow-up of a construction project, wherein mobile devices are used to document finished tasks by photography. Photographs are manually inspected in a central location.

KR 20120122189 A discloses a system in which a mobile device is used to capture an image of a construction site, which image is supplemented with additional information and stored centrally in a server.

KR 20130094465 A discloses a system for construction projects in which a performer received information about what is to be done to a mobile device, and is thereafter allowed to capture an image using the device of the finished job. Images are sent to a manager for manual inspection.

KR 20140025967 A discloses a system in which different persons can cooperate in a project, and wherein a person can photograph and sign a certain state.

TW 1402761 B discloses a system for signing documents for digitalization.

US 2006173785 A1 discloses a system for planning of tasks to be performed by different persons organized in groups and in a hierarchy. The document also discloses delegation of tasks.

US 2010174656 A1 discloses a system for handling punch lists using mobile devices.

US 2012066019 A1 discloses a system for keeping track of a construction project, in which a central server automatically verifies completed tasks by measurements performed on site, such as by a tool or by input by a performer into a mobile device.

US 2013109375 A1 discloses a system in which complex functionality is built into individual hand tools.

US 2013138466 A1 discloses various ways to get hand tools to automatically report the result of tasks performed using such hand tools.

US 2013281157 A1 discloses various ways of collecting data from the field using a mobile device.

US 2014006076 A1 discloses a method for automatic delegation to available resources.

US 2014278650 A1 discloses a system for use in for instance retail, in which staff have portable devices via which replacement personnel can be requested for certain tasks. A central server keeps a central planning over who does what.

US 7898403 B2 discloses a system for automatic tool tracking.

US 8271314 B2 discloses a platform for planning and follow-up of task based construction projects involving several different staff. A synchronization scheme is disclosed for communicating information sharing even when offline.

US 8838980 B2 discloses a system for handling and incorporation of electronic signatures of and into document, such as in the form of copied signature images.

WO 2005001669 A3 discloses a system for automatic tool tracking.

WO 2009013045 A1 discloses a system for handling and tracking of tools. Each tool has a logic circuit for near field communication with a sender carried by a user. The system keeps track of user rights in terms of tool usage.

Hence, the invention relates to a system for follow-up of a building or construction project, which project comprises at least one sub project, which sub projects each comprises at least one work task, which system comprises a database and a central server arranged to communicate with several electronic mobile devices, which system furthermore comprises a software function arranged to be accessed from a respective one of said mobile devices by a respective performer controlling the respective mobile device in question and arranged to provide a graphical user interface on a screen display of the mobile device in question, wherein the central server is arranged to, in said database, associate the project with said sub projects, each of said sub projects to said work tasks and each of said work tasks with at least one particular respective performer, wherein the software function is arranged to allow the respective performer to, using the respective mobile device, mark work tasks associated with the performer in question as finalized, whereby said software function is arranged to communicate to the central server that the work task in question is finalized, wherein the central server is further arranged to, in said database, associate various assignment rights to different performers, wherein the central server is arranged to electronically receive assignment requests from respective software functions of respective mobile devices controlled by individual ones of said performers and in reply to such requests, firstly, verify if the requesting performer has proper assignment rights and, secondly, associate, in said database, a certain respective sub project and/or a certain respective work task with a certain respective performer, as specified in said request, which system is characterised in that the central server is further arranged to, follow-ing an assignment request concerning a particular first performer and a particular sub project comprising at least one work task, automatically change the assignment rights in said database for the first performer so that the first performer obtains the right to in turn assign, by subsequent assignment requests to the central server performed using the graphical user interface of the respective mobile device of the first performer and said software function, work tasks comprised in the sub project in question to other perform-ers, in that the software function is arranged to, upon said change of assignment rights, automatically provide the graphical user interface of the first performer with controls for assigning sad work tasks comprised in the sub project in question to other performers, in that the central server is further arranged to associate, in said database, at least one work task with at least one documentation requirement in the form of a particular required digital media type, in that the graphical user interface is arranged to allow the assigned performer in question to mark a particular assigned work task as finalized and to record said media file, using a digital camera and/or a microphone of the mobile device in connection to said marking of the work task in question, and to communicate it to the central server, and in that the central server is arranged to, automatically and dynamically create, update and electronically provide a digitally stored documentation of the sub project in question comprising said digitally stored media files pertaining to the sub project itself and/or to work tasks comprised in the sub project.

In the following, the invention will be described in closer detail, with reference to exemplifying embodiments of the invention and to the enclosed drawings, wherein:
Figure 1 is an overview diagram of a system according to the invention;
Figure 2 is an overview diagram of the structure of a project and work assignment to various performers;
Figure 3 is an overview diagram of documentation of a project;

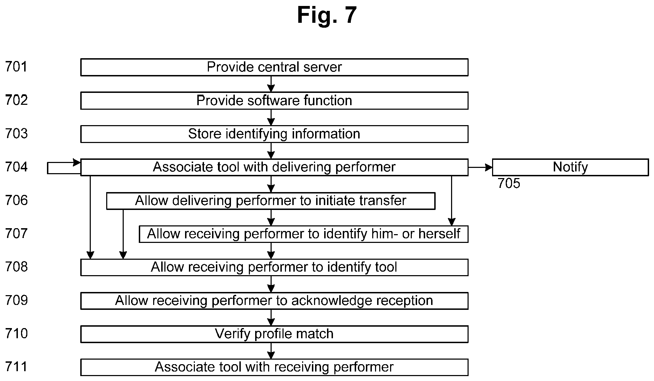

Figures 4-7 are respective flow charts of a respective method according to a first, second, third and fourth aspect of the present invention, which methods are all performed by a system 100 according to the present invention;
Figures 8a-8i are simplified screen dumps illustrating a method according to said first aspect;
Figures 9a-9h are simplified screen dumps illustrating a method according to said second aspect;
Figures 10a-10b are simplified screen dumps illustrating a method according to said third aspect; and
Figures 11a-11e are simplified screen dumps illustrating a method according to said fourth aspect.

All figures share denotations for similar or identical parts.

In the following, first the system 100 will be described in general, together with certain general features pertaining to all four aspects of the invention as described in closer detail thereafter.

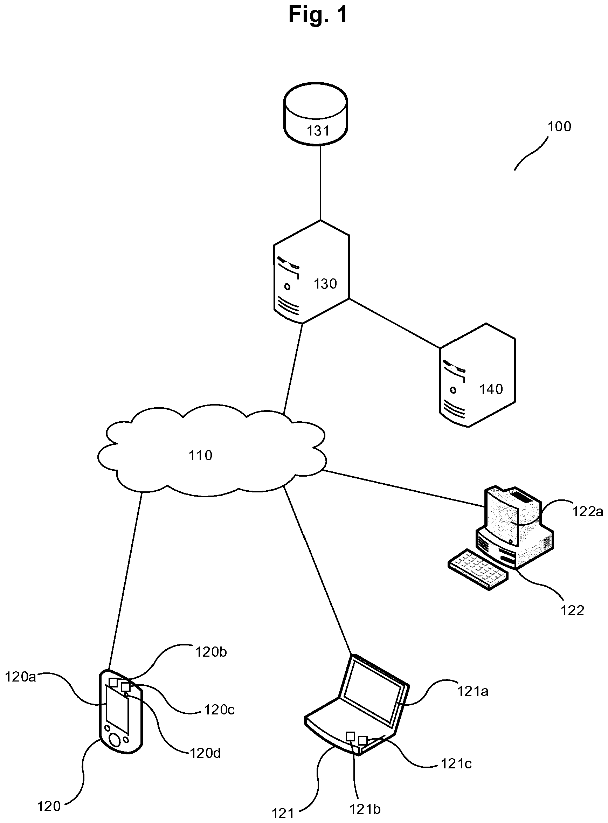

Hence, figure 1 shows a system 100 for performing the various methods described herein, and in particular for use in the administration, follow-up and documentation of a building or construction project.

The system 100 comprises a central server 130, which may be a standalone server; a server whose functionality is distributed across several physical server units; or the like. The server 130 is arranged to communicate with several electronic mobile devices 120, 121, that may each be any type of portable digital device, such as a so-called smartphone; a laptop; a PDA (Personal Digital Assistant); a tablet computer; and so on. 120 is exemplified as a mobile phone; 121 as a laptop computer. It is preferred, and for some embodiments described herein necessary, that the devices 120, 121 feature a respective screen 120a, 121a capable of displaying and providing a GUI (Graphical User Interface), which interface is preferably an interactive graphical user interface (IGUI). It is furthermore preferable that the respective screen 120a, 121a is a touchscreen, in other words a screen capable of sensing and recording input from a user using a finger, a stylo or the like, acting directly on the respective screen 120a, 121a. Moreover, it is preferred that the electronic devices 120, 121 are of general-purpose type, running an operating system and arranged to generally allow a user to locally install software applications on the device 120, 121 in question.

The server 130 and the mobile devices 120, 121 can communicate with each other over a digital communication network 110, such as the internet or a private LAN. In case a private LAN is used, the system 100 may be used in a closed, geographically local environment in which the private LAN is arranged. The devices 120, 121 digitally communicate with the network 110 wirelessly, such as via WLAN, GPRS, 3G, LTE or in any other as such conventional way. In the said example when the network 110 is a private LAN, the mobile devices 120, 121 preferably communicate with the network 110 using a WLAN part of the LAN 110.

The communication between the central server 130 and each mobile device 120, 121 and stationary computer 122 may use any suitable protocol, preferably using a high-level API (Application Programming Interface) which is specifically adapted for the system 100 functionality.

Preferably, every performer, or substantially every performer, involved in a particular project has a respective mobile device 120, 121, each in communication with the server 130 as described above. Preferably, the server 130 communicates with at least ten, more preferably at least one hundred, different such mobile devices 120, 121. Apart from system-level configurations, it is preferred that initial project setup and comparable activities, in other words all, or at least substantially all, information activities relating to the actual realization of the project are conducted using mobile devices such as 120 and 121, as described and exemplified below. As an exception, the same or similar functionality as offered via mobile devices 120, 121, in particular regarding such initial project setup, may also be offered via a stationary computer 122, having a screen 122a. Moreover, third parties, such as an ordering customer to the project, or a supplier, may also be provided with limited access to the system 100 functionality using a mobile device or stationary computer, such as a read-only version of the software function described below, arranged to provide a read-only view on certain project-related information, such as general progress and contact details to performers currently working on particular tasks.

The system 100 further comprises a database 131, which may be comprised in the server 130 or be standalone and in communication with the server 130, and, like the server 130, can be in the form of one single physical storage or distributed.

Each mobile device 120, 121 is associated, in the database 131, with a particular user with a respective user account.

The central server 130 is further connected to one or several third party servers 140, from which the server 130 may, for instance, obtain various documentation regarding a project.

The system 100 comprises the central server 130 and the database 131. However, in general, nor the devices 120, 121, neither the server 140, form part of the system 100 as such. However, the system 100 also comprises a software function according to the following, arranged to be accessed from each respective one of said mobile devices 120, 121 by a respective performer controlling the respective mobile device 120, 121 in question.

The software function can comprise various parts. A central part is preferably executed on the central server 130, and is in communication, as described above, with local parts accessible from each respective mobile device 120, 121. That the software function is "accessible from" each mobile device 120, 121 is to be interpreted so that functionality offered by the respective local part of the software function can be accessed by a user of the mobile device 120, 121 in question using the physical mobile device 120, 121. This may mean that the local software function part is a locally installed application, which is executed on the hardware of the respective mobile device 120, 121 in question; that it is made available to the user on the mobile device 120, 121 but executed or at least installed in a remote location, such as HTML5 functionality accessed via a standard web browser running on the device 120, 121 in question; or a mixture thereof, such as a locally installed application accessing functionality remotely via web service calls or the like. In some embodiments described herein, the terms "first software function" and "second software function" are used, with the intended meaning of local software function parts as accessed via a respective first and second mobile device 120, 121. It is understood that the software function could be provided to several mobile devices 120, 121 from one and the same central location, such as from the server 130, but that the software function in such cases will provide each respective user via a respective mobile device 120, 121 with functionality that is individualized for the particular user using the particular mobile device in question.

The said software function is arranged to allow the user of a mobile device 120, 121, via which the software function is available, to interact with the mobile device 120, 121, hence accessing and using various functionality of the system 100 as described hereinafter.

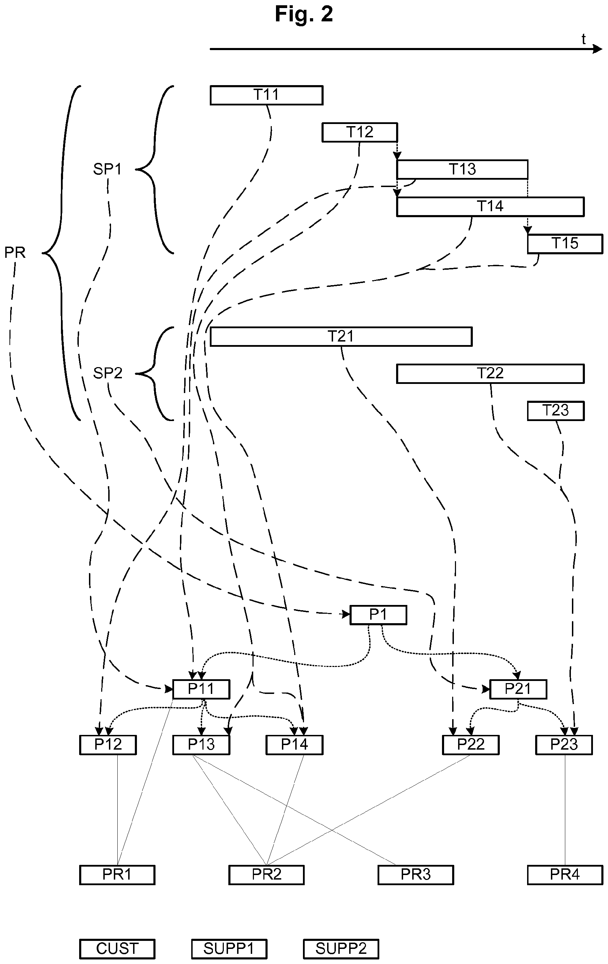

Figure 2 illustrates a simplified view of a project PR being managed using the system 100 and the mobile devices 120, 121. "t" denotes time.

The project PR comprises at least one sub project SP1, SP2. In the figures, SP1 is a living room refurnishing activity, while SP2 is a bathroom renovation activity. In larger projects, there may be many sub projects, preferably at least 10, more preferably at least 100 sub projects. Each such sub project may be unique, but preferably at least 10, preferably at least 20, sub projects are identical or similar, in the sense that they are identical apart from certain minor exceptions due to differing prerequisites. For instance, the project may be a renovation of a block of apartment buildings, comprising apartments roughly falling into three categories (such as "1 room", "2 rooms" and "3 rooms"). Then, the set of 1 room apartments may have identical or at least very similar kitchens, which are to be refurnished in basically the same fashion. However, each tenant may be offered a variety of individual selection, for instance in terms of tile coloring. In this case, such differing tile coloring constitutes a minor exception in the above sense.

Each sub project comprises at least one work task, in turn constituting a time- and scope wise well-defined assignment, typically performed by a single or possibly a couple of performers. In case several performers are involved in one single work task, the corresponding applies as described herein regarding one performer and a particular work task.

In figure 2, SP1 comprises tasks T11-T15, from T11 (demolition of old decorations) to T15 (laying new wooden flooring). SP comprises work tasks T21-T23, from T21 (demolition) to T22 (heated floor) to T23 (installations). It is realized that SP1, SP2, T11-T15 and T21-T23 merely constitute illustrating examples.

It is further realized that there may be more than three levels (project - sub project - work task) for complex projects. For instance, large sub projects may be organized into several sub sub projects, in a way which is analogous to the one described herein.

The system 100 is arranged to, in database 131, store information, such as personal and contact information, about users. One category of users is performers P1, P11-P14, P21-P23 participating in the project. Performers P1, P11-P14, P21-P23 may each be associated with one or several particular profiles PR1-PR4, as indicated by straight lines in figure 2. A profile is a description of a certain competency, such as "painting" or "masonry". Hence, one particular performer P13 may be associated with several profiles PR2, PR3. Each work task is set up during project initiation, again in the database 131, with particular requirements, one of which being the desired or required profile or profiles of a or the performer(s) that are to perform the work task in question.

Another category of users are external or third parties, such as an ordering customer CUST and suppliers SUPP1, SUPP2.

All registered users may use a respective mobile device of choice to access system 100 functionality via the said software function, as described above. The nature and scope of such access is typically automatically governed, by the server 130, on the basis of the type and profile(s) of the user in question.

During a project initiation phase, a particular performer P1 is preferably assigned the responsibility for the project PR. The central server 130 is arranged to automatically, in connection to the assuming of project PR responsibility by the performer P1, associate P1 with system assignment rights to assign respective delegated sub project SP1, SP2 responsible users P11, P21, who in turn automatically, by the central server 130, achieve system access assignment to assign delegated work task T11-T15, T21-T23 responsible performers P12-P14, P22-P23. These delegations are illustrated with short dashed curves in figure 2. As can be seen in figure 2, illustrated by long dashed curves, when all delegations have been accomplished, the assignments of the project PR are as follows:

| **Work task** | **Performer** |
|---|---|
| T11 | P12 |
| T12 | P13, P14 |
| T13 | P11 |
| T14 | P14 |
| T15 | P14 |
| T21 | P22 |
| T22 | P23 |
| T23 | P23 |

Hence, all actual work being performed in the project PR falls under at least one work task. Each work task can be assigned to multiple performers, who then for instance work collaboratively. Each performer may be assigned to several work tasks. A performer, such as P11, who is sub project SP1 responsible, may also be work task T13 responsible.

Via the software function, each performer may for instance take part of a graphical gantt diagram of the project planning over time (as illustrated in figure 2), comprising the various work tasks and their mutual order and planned timing, and specifically graphical or alphanumerical information regarding the particular work task(s) assigned to the performer in question. What information is available and editable by each performer is dynamically determined by the software function, in communication with the central server 130, based upon continuously updated information stored in database 131 regarding each performer regarding current assignment, profile, etc.

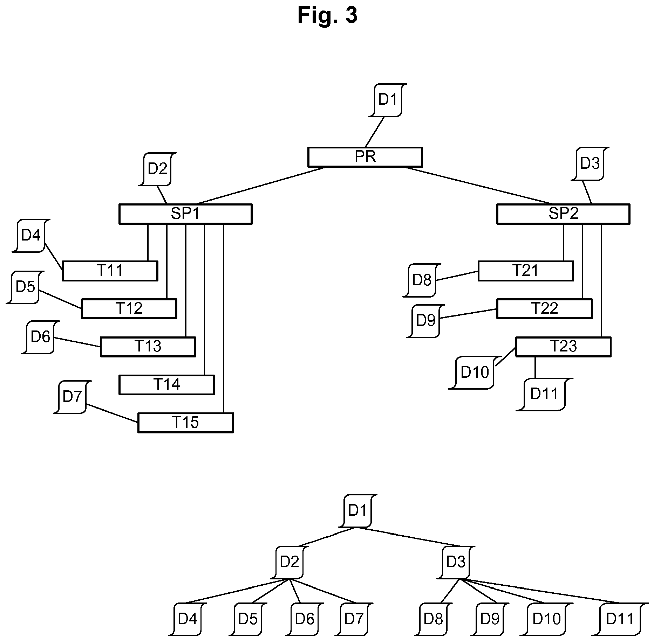

Figure 3 illustrates another view of the project PR as stored in the database 131 and managed by the central server 130. Preferably each work task, preferably also each sub project and preferably also the project PR itself, can be associated with a respective piece of documentation D1-D11 (associations illustrated in figure 3 by straight lines). Such documentation, which preferably is digitally stored in the database 131, and/or fetched from or possibly linked to an external source 141, can be of two types, namely a priori information and dynamically created information.

A priori information is typically static and relates to the work task, sub project or project in question. It may for instance comprise an ISO standard, a quality certification document, a user's guide to particular machines installed in a kitchen, an installation specification, etc. Dynamically created information is created during the process of project carry-through, and may for instance comprise a piece of photo documentation of a finished work task, a deviation report relating to a particular work task, and so on. Naturally, a priori information may also comprise images, video clips, etc.

Regarding both a priori information and dynamically created information, it is preferably true that a certain minimum information requirement, if any, is specified for each work task, sub project and project, by the central server 130 and for each project managed by the system 100.

In order to finalize a project, it is preferably required that a respective piece of information D1-D11 of the prescribed type or types (comprising images, video clips, audio clips, alphanumerical pieces of information, etc.) is made available and stored in the database 131 for each work task and sub project, as well as for the project PR itself. However, the informational content of each piece of documentation D1-D11 is preferably not scrutinized as such, it is rather the actual existence of a piece of documentation of the prescribed type which is verified. It is also preferred that the project, each sub project and each work task is allowed to have more associated information in the database 131, apart from that which is required, in case this is requested by individual performers.

Figure 3 also shows a way in which the project, sub projects and work tasks are associated in the database 131, in a tree structure.

It is preferred that the total number of tasks in the project PR is at least 50, preferably at least 100. It is also preferred that the total number of sub projects is at least 10, preferably at least 20. Furthermore, it is preferred that the total number of performers is at least 20, preferably at least 50, most preferably at least 100.

### First aspect

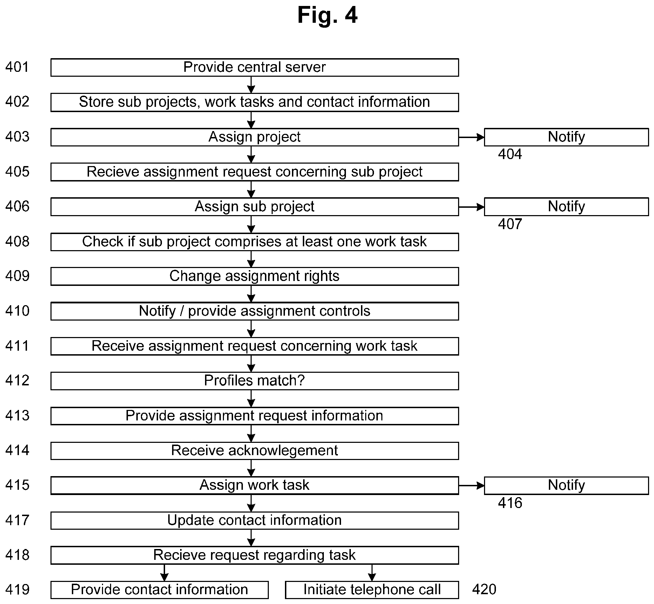

Figure 4 illustrates a method according to a first aspect of the present invention, which method is performed by the system 100. The method steps in figure 4 are worded from the point of view of the system 100, comprising the central server 130.

Hence, in a step 401, the central server 130 is provided, and arranged with the database 131 for storing contact information regarding a plurality of performers of the above discussed type. The system 100 is also arranged with the above discussed software function, arranged to be accessed from a respective mobile device 120, 121 by each performer controlling the respective mobile device 120, 121 in question. The central server 130 is preferably arranged to communicate with each mobile device 120, 121 via the said software function.

According to one important aspect of the embodiment shown in figure 4, the system 100 is arranged to, in a step 402, store contact information regarding a plurality of the said performers, preferably all or at least substantially all of said performers. In the same step, sub projects SP1, SP2 and work tasks T11-T15, T21-T23 are also defined and stored in the database 131, in the way illustrated conceptually in figure 3.

Furthermore, the central server 130 is arranged to associate various assignment rights to different performers as described above. Preferably, each performer is associated with particular assignment rights from the start of the project, which assignment rights may change due to, for instance, assignments given to the performer in question. Such assignment can be performed in connection to a project initiation or startup phase, in which a project PR responsible P1 is appointed, as described above, and possibly also one or several other of the performers P11-P23 involved in the project PR. This may either be performed using the software function in the way described hereinafter, either via a mobile device 120, 121 or the desktop computer 122 in communication with the central server 130.

Furthermore, according to this embodiment, the central server 130 is arranged to, after said project initiation and preferably also during the execution of the project PR, receive assignment requests from individual ones of said performers P1, P11-P14, P21-P23, and in reply to such requests associate a certain respective sub project SP1, SP2 and/or a certain respective work task T11-T15, T21-T23 with a certain respective performer, as specified in the said request, under condition that the requesting performer has proper assignment rights.

In other words, performers having been associated with adequate assignment rights may, before and preferably also during the project PR, assign responsibility for certain sub projects and/or certain work tasks to other performers, using the software function via the respective mobile device 120, 121. Preferably, users assigned to sub projects may assign work tasks comprised in such sub projects to other performers. However, it is preferred that performers may also assign a work task with which they are currently associated to a different performer, or even, in some embodiments, that certain performers may assign individual sub projects and/or work tasks to particular performers even if not associated with such sub projects or work tasks themselves.

Hence, in a step 403, the project PR is assigned, such as on the command of a manager, to performer P1, in the example illustrated in figure 2 to performer P1. This typically means that performer P1 has responsibility for the execution of the project PR. Preferably, this also results in that the central server 130 automatically associates the performer P1 with assigning rights for sub projects SP1 and SP2, since these sub projects are sub projects to the project PR as defined in the database 131 as illustrated in figure 3.

Preferably, in a step 404 the performer P1 is notified as to the amended assignment rights associated with performer P1. This notification is preferably provided to the mobile device 120, 121 of the performer P1, and is preferably automatically communicated to the mobile device in question and displayed on the screen 120a, 121a thereof by the software function. Such notification procedure is described more in detail in relation to step 407 below.

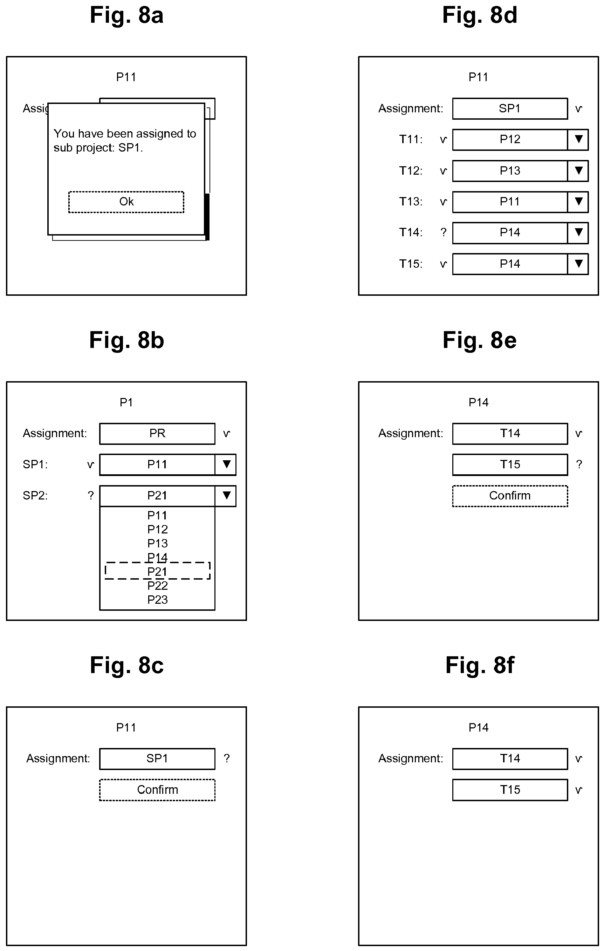

After step 404, an IGUI provided by the software function, in communication with the server 130 and on the screen display 120a, 121a of the mobile device 120, 121 of performer P1, may be as is illustrated in figure 8a, which is a simplified screen shot. In general, the various screen shots shown in the figures are such IGUI:s provided by the software function, in communication with the central server 130 and on the respective screen display of a mobile device used by the performer in question. The performer is, in the examples shown herein, identified at the top of the respective screen.

Hence, figure 8a identifies the performer P1 and P1:s assignment (the project PR). The checkmark next to "PR" means that the assignment of PR to P1 has been confirmed and is in force. Furthermore, as a result of the assignment of P1 to PR in the central server 130, assignment rights for sub projects SP1 and SP2, being sub projects of the project PR, are automatically associated with the performer P1, and the IGUI is updated accordingly by the central sever 130. Hence, via interactive user controls (marked "SP1:" and "SP2:" in figure 8a), P1 may select among a list of possible performers to be assigned as responsible for each respective sub project SP1 and SP2. This list is preferably provided by the central sever 130, based upon for instance profiles PR1-PR4 associated with various performers in database 131 and upon any limitations, also stored in database 131, regarding what performers may be sub project responsible, and so forth.

In the example shown in figure 8a, P1 has selected P11 as the performer responsible for SP1 and P21 for SP2. This assignment will thus result in the delegation shown in figure 2. Hence, using the IGUI, in a step 405, the performer PR requests the central server 130 to assign at least one sub project SP1, SP2 to a particular respective performer P11, P21.

The central server 130 receives these requests, by the software function communicating them to the central server 130, and in reaction thereto, in a step 406, assigns each sub project SP1, SP2 accordingly.

In a preferred step 407, the assigned respective sub project responsible is notified. This may look like in figure 8b, in which a simple information message is displayed automatically, for instance in the form of a push message being sent to the mobile device of P11 and displayed in a popup message box; or it may look like in figure 8c, in which the pushed message results in a dialog in which the performer P11 is allowed or required to confirm the assignment before the assignment can enter into force. In the latter case, it is preferred that the confirmation is sent to the central sever 130, by the software function, and that assignment does not enter into force in the central server 130 until such confirmation has been received from the mobile device of the performer P11 in question.

After the assignment has entered into force by storing the corresponding association in the database 131, the IGUI of the assigned performer P11 in question is preferably updated, such as indicated by the checkmark next to "SP1" in figure 8d, to signal to the performer P11 that the assignment in question is in force.

Then, after the notification in step 407 and the receipt of any mandatory confirmation, in a step 408, the central server 130 checks whether the sub project SP1 assigned to the performer P11 in question comprises at least one, preferably several, work tasks. In the present example, this is clearly the case, since SP1 comprises T11-T15 (see figure 3).

Following, or preferably in reply to (in case no confirmation is required from the assignee performer), such an assignment request concerning a particular performer P11, P21 and a particular sub project SP1, SP2, which sub project in turn comprises at least one work task, the central server 130 is arranged to, in a step 409, automatically change the assignment rights for the assigned performer P11, P12 in question.

According to this aspect of the present invention, the respective assignment rights of P11, P12 are changed by the central server 130 so that the performer in question obtains the right to in turn assign, by subsequent assignment requests to the central server 130 performed using the respective mobile device 120, 121 of the performer in question and the said software function, the work tasks comprised in the sub project in question to yet other performers.

In other words, when a particular performer requests that a particular other performer is assigned to a particular sub project, the system 100 is arranged to automatically associate the said other performer with assignment rights allowing the other performer to assign work tasks that belong to the sub project in question to yet additional performers. As mentioned above, what such additional performers are available for assignment may depend upon certain predetermined criteria stored in the database 131.

Then, in a step 410, the central server 130 is preferably arranged to, upon the said change of assignment rights, automatically and electronically notify, via the respective mobile device 120, 121 and the software function, the assigned performer P11 in question, that the assignment rights have been changed for him or her.

In figure 8d, the presently described case in which the performer P11 in question has gained the assignment rights by the central server 130 to assign work tasks for the particular sub project SP1, the software function is arranged to automatically provide the IGUI of P11:s mobile device with interactive graphical controls for assigning work task comprised in the particular sub project SP1, preferably all work tasks T11-T15 comprised in the sub project, to a respective one additional performer. In figure 8d, these controls are illustrated as respective drop-down list for each work task T11-T15 in the sub project SP1, each populated by the software function based upon information in the database 131 regarding availability of particular performers for particular work tasks.

Actually, in this exemplifying embodiment, the provision of these controls also constitute an implicit notification to P11 of the updated assignment rights for this performer P11, since no such assignment would be possible without such right in place.

Thereafter, the sub project responsible performer P11 may use the said controls to request that a particular performer is assigned as responsible for a particular work task, by for instance selecting a particular performer P12 for a particular work task T11. As a result, the central server 130 will, via the software function, in a step 411, receive an assignment request concerning said particular performer P12 and said particular work task T11.

As described above, each performer may preferably be associated with at least one profile PR1-PR4, and each work task is furthermore associated with at least one profile, in the central server 130, such as in the database 131. Then, in a step 412, the central server 130 is arranged to compare the profile(s) of the particular performer P12 which is to be associated with the particular work task T11 with the required profile(s) of the work task T11 in question. The central server 130 is further arranged not to associate the certain work task T11 with the certain performer P12, in reaction to the corresponding assignment request from P11, in case the certain work task T11 is not associated with at least one profile which also is associated with the certain performer P12. In the present example, the performer P12 is associated with the profile skill "demolition", why the assignment is allowed by the central server 130 in step 412.

Preferably, the central server 130 is then arranged to, in a step 413, cause the software function to provide information to the particular assigned performer regarding the assignment request pertaining to the performer in question, and to allow the particular performer in question to send an acknowledgement of the assignment in question to the central server 130, using his or her respective mobile device 120, 121. This may pertain to several work tasks for one and the same performer, as is illustrated in figure 8e, in relation to an exemplifying assignment request of P14 to T14 and T15, as sent by P11 using the IGUI illustrated in figure 8d. The software function hence provides, on request by the central server 130, the IGUI illustrated in figure 8e, in which performer P14 is asked to confirm his or her assignment to work tasks T14 and T15.

In a step 414, the acknowledgement is received by the central sever 130 from the mobile device 120, 121 and via the software function.

Preferably, the central server 130 is arranged not to associate, in a step 415, the performer P14 in question with the work task(s) T14, T15 in question before such an acknowledgement has been received by the central server 130.

Then, in a step 416, a notification is preferably provided to the assigned performer P14. In the view shown in figure 8e, an acknowledgement has been sent regarding T14, and P14 has been associated as responsible with T14, which has also been notified by the central server 130 to the IGUI shown in figure 8e, as is illustrated using the checkmark next to "T14". The assignment of P15 to T15 is yet to be acknowledged and notified. In figure 8f, a subsequent state of the IGUI is shown, in which the assignment to T15 has also been acknowledged and notified.

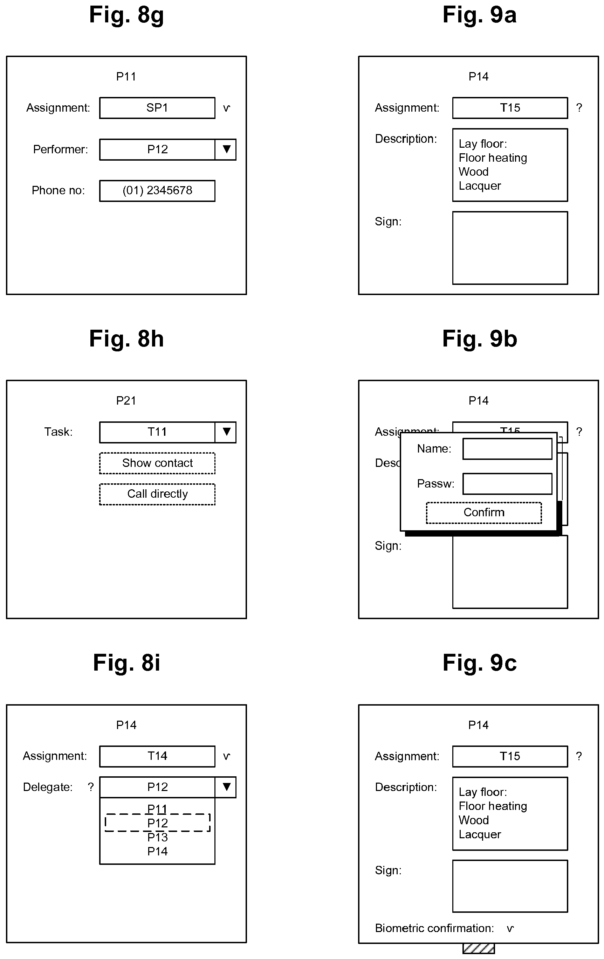

Once a particular sub project responsible P11 has been assigned to a sub project SP1 which comprises at least one work task T11-T15, it is preferred that P11 is allowed to further edit details regarding performers assigned to such work tasks. Hence, the central server 130 is then arranged to, in response to, or at least following, an assignment request concerning a particular such performer P11 and a particular such sub project SP1, automatically change the assignment rights for the assigned performer, for instance as a part of step 409, so that the performer P11 is associated, in the database 131, with the right to add performers to the system and/or to edit the contact information of performers assigned to work tasks T11-T15 comprised in the sub project SP1 in question. The case in which P11 is allowed to, in a step 417, edit contact information regarding P12 is shown in figure 8g, in which the phone number of P12 may be altered by performer P11. Such edits are communicated from the respective mobile device 120, 121, by the software function, to the central server 130 for updating in the database 131 and automatic distribution to other users of the system 100. According to an important part of the present aspect of the invention, the central server 130 is furthermore arranged to continuously make available, to users P1, P11-P23, CUST, SUPP1, SUPP2 of the system, updated contact information for performers assigned to work tasks comprised in the project PR.

As such, the central server 130 is arranged to accept and reply to, from the mobile devices 120, 121 and via the software function, requests regarding what work tasks a particular performer is associated with. Furthermore, the central server 130 is preferably arranged to accept and reply to such request regarding what performer or performers are associated with a particular work task, and in such a reply include contact information regarding the performer or performers in question.

Hence, in a step 418, such a request regarding a work task is received by the central server 130, such as provided from performer P21 or user CUST, using the respective mobile device 120, 121 and an IGUI provided thereon by the software function. The IGUI is illustrated in figure 8h, in which the querying performer, in this exemplifying case P21, has selected the work task T11. Hence, the software function is preferably arranged to provide, on the respective screen display 120a, 121a of said mobile device 120, 121, a contacting functionality, allowing the performer P21 controlling the mobile device 120, 121 in question to browse through the project in terms of sub projects and work tasks, and to select a particular work task T11.

Then, the software function provides P21 the opportunity to request from the central server 130 and, in a step 419, be provided and show contact information of the performer(s) assigned to the work task T11 in question, and/or, in a step 420, to automatically call the performer P12 assigned to the work task T11 using the mobile device 120, 121 in question.

In the first case, the software function queries the central server 130 for the contact information in question, which is returned to the mobile device 120, 121 and displayed to P21 in the IGUI. In the second case, the software function in addition thereto, or instead of showing the contact information in said IGUI, automatically invokes a native telephone functionality on the mobile device, which device in that case is provided with voice communication functionality such as using VoIP (Voice over IP) or functionality for making voice calls over a mobile communications network using a SIM (Subscriber Identity Module) card comprised in the mobile device in question, to initiate a voice call to the performer P12 in question using the contact information provided by the central server 130 to the software function.

Furthermore, it is preferred that each performer that has been assigned to a particular sub project or to a particular work task is automatically associated, by the central server 130 and in connection to when being assigned to the sub project or work task in question in a way which is similar to step 409, with assignment rights to further assign his or own sub project or work task to other performers. Such reassignment of the performer's own assignment then takes place via a respective IGUI provided on the screen display 120a, 121a on a mobile device 120, 121 of the performer in question, as exemplified in figure 8i, showing a screen using which P14, who is assigned to T14, may reassign T14 to another performer, such as P12.

Using a system and method according to this aspect of the invention, the delegation process of a project can be distributed across many different actors and stake holders in a convenient and automated way, but which still allows central control over what parties are involved in what parts of the project. Also, it becomes easy to contact a particular performer actually performing a particular task at the current time, even after local re-planning, illnesses and so forth. All this can be performed when in the field, since all stake holders can use their own general-purpose mobile devices, such as normal smartphones, to interact with each other and the system 100.

This is particularly helpful for a building or construction project, in which a main contractor typically brings in subcontractors in turn employing persons that are not necessarily known to the main contractor. By simply delegating a sub project to a particular person at such a subcontractor, and by providing access to the software function to each performer, the main contractor needs not keep track of what person is doing what tasks, since this information is automatically updated as a consequence of the actual delegation to various performers of the work tasks involved.

### Second aspect

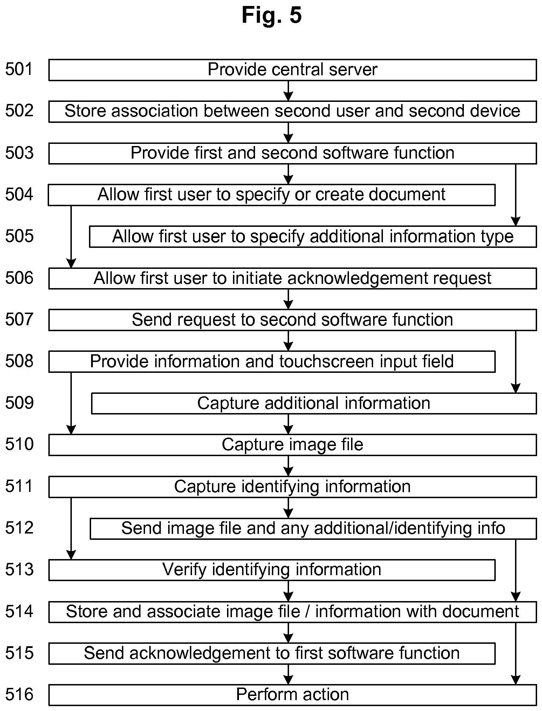

Figure 5 illustrates the method steps according to a second aspect of the invention, relating to a method for acknowledgement of an information content of a digitally stored document, which method is performed by the system 100.

In a step 501, which is similar to step 401, the central server 130 is provided. In this step, a first mobile electronic device 120 or 121 and a second mobile electronic device 121 or 120 are also provided, both in communication with the central server 130 as described above. Both these mobile devices 120, 121 are in general as described above. At least the second mobile device, but preferably also a first mobile device, comprises a touchscreen.

In a step 502, or beforehand, the above mentioned association between a second user, in the following exemplified as performer P14 or customer CUST, and the second mobile device is stored in the database 131, so that the central server 130 can identify the mobile device of the user in question. The "second" user is, in the terminology of this second aspect of the invention, an acknowledging user.

In a step 503, the above discussed software function is provided. In the following, a first such software function is provided for allowing a first user, exemplified in the following as performer P22, to access system functionality using the said first mobile device. A second such software function is provided for the said second user to access system functionality using the said second mobile device. Hence, each of said first and second performers may interact with the respective first and second mobile device by the use of the first and second software function, respectively. The "first" user is, in the terminology of this second aspect of the invention, a user requesting an acknowledgement from the second user.

According to the present aspect, in a step 506, the first software function is arranged to allow the first user, via the said first mobile device, to initiate a request that a second user, via the second software function and the second mobile device, acknowledges the said information content of the document in question.

Before step 506, however, the first user is allowed to specify what document the informational contents of which is to be specified. The term "document", in this context, should be understood as any digitally stored, well-defined set of information the informational contents of which can be presented to the second user by the second software function and using the hardware functionality of the second mobile device. Hence, the document may comprise textual, image, video and/or audio data. Specifically, the document may comprise, for instance, a piece of typed text, a recorded sound and/or a recorded photographic image.

According to a first alternative embodiment, the user, in a step 504, selects a document from a certain source, such as a document stored locally in the first mobile device, stored in the database 131 or on a third party information source such as server 140. According to a second alternative embodiment, the first software function is instead arranged to allow the first user to create the document in step 504. For instance, an IGUI presented by the first software function on the screen display of the first mobile device may comprise controls for activating a built-in camera or audio microphone on the first mobile device, or for allowing the first userto enter text into the first mobile device. Such information is captured and then constitutes or is comprised in the document thereafter sent to the second user.

In addition thereto, according to a preferred embodiment, the first software function is arranged to, in a step 505 performed in connection to the initiation by the first user of the request, allow the first user to specify at least one information type of additional information which is to be provided by the second user, preferably selected from a still or moving image or a sound recording. In case such additional information is specified, the second software function is arranged to allow and require the second user to record such additional information of the specified type(s), using hardware of the second mobile device, before the signature image is sent (see below), and any such additional information is sent, together with the signature image, to the central server, associated with the signature image and stored in the central server.

It is preferred that the first software function is arranged to allow the first user to specify zero, one or several such information types that are to be required as input from the second user as a part of the said acknowledgement. Hence there may be several required pieces of information to be entered by the second user, even of the same type. For instance, the second user may be required to provide two still images and a piece of text as a part of the acknowledgement.

According to one preferred embodiment, the first user is not required to identify him- or herself, to the second software function, in connection to initiating or sending the said request in step 506.

Then, in a step 507, the said request is electronically communicated to the second software function. Preferably, this takes place by the first software function communicating the acknowledgement request to the central server 130, which as a result thereof, and possibly after certain verifications of access rights and the like, against information stored in the database 131, sends the acknowledgement request to the second software function for display to the second user on the second mobile device touchscreen.

As a reaction to the receipt of the acknowledgement request in step 507, the second software function is arranged to, in a step 508, provide the information content of the document in visible format to the second user in a preferably interactive GUI provided on the screen of the second device. In addition thereto, in the same step 508, the second software function is arranged to also provide on the same screen a field, wherein the second user, in a step 510, graphically can draw a signature, so that a digitally stored signature image is captured, in the form of a digitally stored image file comprising the said drawn signature. The signature can be captured in a way which is conventional as such, for instance by providing a surface on the touchscreen across which the second user can draw a signature using a finger, a stylo or the like, where the motion of the finger or stylo is sensed and stored as a vectorized image file by the second software function.

In case any additional information is required by the first user as described above, the second software function is arranged to provide to the second user, in a step 509 and via the said IGUI, the possibility to create such additional information, for example by automatically activating a camera or a microphone of the second device for use to record additional information of the specified type.

According to a preferred embodiment, the second software function is arranged to allow the second user to identify him- or herself before sending the signature image. Such identification is preferably mandatory if this is requested, as part of the acknowledgement request produced by the first user. The identification may take place in several different ways, such as by allowing the second user to, via the said touchscreen, electronically enter predetermined user credentials such as a username/password combination; or using a biometric sensor 120c, 121c, such as a fingerprint or iris sensor, in the second mobile device, which is used by the second software function to automatically sense and store one or several biometric measurement data regarding the second user.

Hence, in a step 511, such identifying information is captured by the second software function. According to one particular preferred embodiment, the identification is performed based upon the actual possession of the second mobile device as such, which is verified using a previously stored association in the central server 130 between the second mobile device and the second user, so that the identification is automatically performed by the second software function and/or the central server 130 by identifying that the second mobile device is actually used to send the signature image. In this case, the identifying information may be constituted by a piece of hardware-identifying information as read from the second mobile device by the second software function, or device-identifying information pertinent to a communication session between the central server 130 and the second mobile device.

Moreover, the second software function may advantageously be arranged to automatically record a geographic location of the second mobile device, using geographic location sensing hardware of the second mobile device such as a GPS (Global Positioning System) function, in connection to the creation of the signature image. In this case, the second software function is arranged to communicate the recorded geographic location to the central server 130 together with the signature image.

Hence, in step 512, the second software function is arranged to, as a response to the acknowledgement request sent in step 507, send the said signature image to the central server 130.

According to the present aspect of the present invention, the said signature image is not a part of the said document. This is to be interpreted so that the signature image is not an integrated part of the document, such as an embedded image in a word processing format document such as a DOCX document or a portable document format such as a PDF document. Instead, the signature image is transferred to the central server 130 as a separate image. Even more preferably, the document, in the sense of the one or several digital files constituting the document and coding the digital information to be acknowledged, does not contain information coding for the signature image, and the signature image is instead sent as a separate file.

In step 512, apart from the image file comprising the said signature, any of the captured additional and/or identifying information and/or position information is also sent to the central server 130.

Thereafter, in a step 513, any identifying information is verified by the central server 130 using previously stored information in the database 131 regarding the second user. Alternatively, in particular if the identifying information is biometric information, the identifying information is merely stored in the database 131 for future reference, and is not subject of any verifying algorithms. The presence (rather than the contents) of any additional information is also preferably verified by the central server 130 in step 513, and any positioning information may be verified.

If all these verifications turn out in the positive, then, in a step 514, the central server is arranged to associate the signature image to the document and to store them both in digital format in the database 131, preferably along with any identifying information, additional information and positioning information provided by the second software function in the step 512.

Thereafter, in a step 515, the central server 130 is arranged to supply information to the first software function that the information content of the document has been duly acknowledged.

Lastly, in a step 516, in the case in which the acknowledgement of the informational contents of the document is intended to result in a particular predetermined action, such action is performed, preferably on the initiative of the central server 130 but possibly of the first software function. For instance, if the document contains a declaration that a certain work task has been finalized, the system 130 may record the work task as finalized in the database 131.

In a preferred embodiment, apart from the storing of the signature image in the database 131, no other verification of the information contents of the document is made. In other words, there is preferably no OCR (Optical Character Recognition), statistical image analysis, comparison analysis or any other automatic calculation with the purpose of validating the informational contents of the document. Instead, the acknowledgement from the second user and the presence of the signature image in the database 131 is taken for sufficient proof in order for the central server 130 to allow that the particular action is performed in step 516.

It is also preferred that no comparison of the signature image is performed to a known signature for the second user, but that the signature image is simply captured and stored in the database 131 for later reference.

Even though it is preferred that the first and second mobile devices are different devices, according to one preferred embodiment, the first software function is arranged to, in connection to step 506, allow the first user to select whether the second user is to acknowledge the said information content using the first or the second mobile device. Then, in case the first mobile device is to be used, the said first and second mobile devices are one and the same mobile device and the said first and second software functions are one and the same software function. In other words, a first user may request a second user to acknowledge the informational contents of a certain document using the mobile device of the first user, by handing the mobile device in question to the second user for signing on the touchscreen of the first mobile device. Apart from the used mobile device, the method may be as described above in connection to figure 5.

The general method for acknowledging the informational content of a document described herein can be used in various alternative embodiments tailored for particular situations.

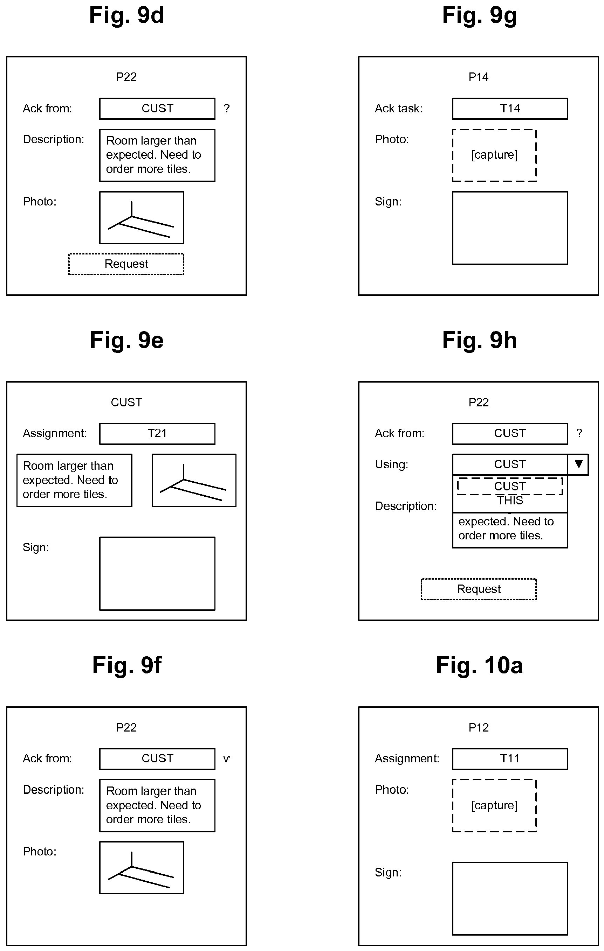

As an example, in some situations the first user may be the same as the second user, or may even be the central server 130. This would be the case when a user is finished with a particular task. As will be described in closer detail below, for finalizing a task the performer responsible for the task in question may be required to document the finished task and to sign the documentation. Then, the central server 130 may be the requiring part, specifying the document as the work task finalization report and requiring the performer to create an image of the finished task as additional information in step 509. This is illustrated in figure 9g, in which the performer P14 has finalized the work task T14, and wishes to report this to the system. The central server 130 has previously associated the work task T14 with a requirement for providing a photograph as documentation of the finalized work task, which is used for confirmation as well as a part of the final documentation of the project PR as described below. Then, the IGUI illustrated in figure 9g provides the opportunity for P14 to, by clicking on the "[capture]" box, activate the built-in camera of P14:s mobile device, and then, by signing in the box "Sign:", sending both the document (the finalizing report), the required additional information (the photograph image) and the signature image to the central server 130. It is noted that the central server 130 in this example may have requested the acknowledgement of the document well ahead of time, such as in connection to the assignment of P14 to T15.

Figure 9a illustrates an example of a method according to the present aspect of the invention, showing a simplified screen of the IGUI provided by the second software function on the second mobile device of the second user, in this case performer P14 who is accepting the assigning of the task T15. Hence, in a method as described in connection to figure 4, the confirmation described above in connection to figure 8c may be replace by the requirement of providing a signature according to the above described in connection to figure 5.

In the present case, the assignment of work task T15 comprises laying a floor, specifically finalizing floor heating, laying the wooden floor and then a layer of lacquer. In order to confirm the assignment of the task T15, the performer P14 must sign in the box marked "Sign:", thereby acknowledging the informational content of the document in question, namely the text in the box labelled "Description:". Once acknowledged, the signature image file resulting from this is sent by the software function providing the IGUI illustrated in figure 9a, to the central server 130 and is stored in the database 131. That way, it is possible to both quickly and easily obtain a confirmation from the provider P14. It is also possible to, at a later point, investigate the signature image file in the database 131 and to verify that the performer P14 in question likely signed the assignment on that day. In this case, the document in the form of the text in the "Description:" box may also be the document the informational contents of which is to be acknowledged by P14 once finalized, using a second signature by the performer P14, at that point together with for instance a photograph of the finalized flooring that must be provided by P14.

Figure 9b illustrates the case in which additional identifying information is requested as a part of the acknowledgement in figure 9b, in this case a conventional username/password combination. Figure 9c illustrates the case in which a fingerprint sensor (dashed), which is a part of the second mobile device hardware, is used to capture biometric information as an additional identifying piece of information. The checkmark in figure 9c illustrates that the fingerprint of the performer P14 was successfully read and will be sent to the central server 130 along with the signature image as soon as performer P14 signs the "Sign:" box.

Upon signing, in this case the action to perform in step 516 is thus that the assignment of the work task T15 to P14 enters into force and is recorded in the database 131. In the case when the performer P14 signs again, to report the finalization of the task T15, the action to be performed is to mark the task T15 as finalized in the database 131, and perhaps notify affected performers as described below.

Figure 9d shows the case when the document is produced by a first user P22, specifying that an unexpected problem has occurred during the execution of a particular work task assigned to P22. Namely, the room was found to be larger than expected, and more tiles must be ordered. Hence, the first user P22 writes the text shown in the "Description:" box, and takes a photograph of the floor, using his or her mobile device. He specifies the user CUST as the second user, who is to acknowledge the informational content of the document produced by P22, and presses the "Request" button. Figure 9e is what CUST then sees on his or her mobile device, in the IGUI provided by the second software function. The work task T21 is specified, as well as the document (text + photograph image) in question. When CUST then signs in the "Sign:" box, the problem and its proposed solution is seen as acknowledged. The step 516 action may then be that the central server 130 issues a corresponding problem report which is marked as confirmed with the ordering customer and ready for handling.

The performer P22 will, in turn, upon signing by CUST, receive information from the central server which is shown by the P22 mobile device IGUI, as illustrated in figure 9f. The checkmark shows that CUST has acknowledged the informational content of the document. Figure 9h illustrates the case when the performer P22 wishes to use his or her own mobile device for CUST to sign. Then, "CUST" or "THIS" is selected in an interactive control, such as drop-down list, and if "THIS" is selected, the IGUI illustrated in figure 9e is shown on the first mobile device, namely the mobile device of P22.

In addition to providing the signature image to the central server 130, the system 100 and method according to this aspect of the invention may be arranged to further increase security by requiring the user to take a photograph of him-or herself in connection to the signing on the mobile device screen. The software function may be arranged to automatically invoke a built-in camera to capture such an image during the signing by the performer in question, in case the mobile device has a camera facing the user when looking at the said screen. It is also possible to do the corresponding with a built-in microphone of the mobile device, which is then automatically activated to record a sound clip in connection to the signing by the performer. In this case, the performer may be encouraged to, for instance, state his or her name during the audio clip. Another possibility is to automatically capture a short video clip using a combination of camera and microphone. It is also possible to allow the performer to manually capture such image and/or sound material in connection to the signing, which then may be required by the software function in order to be able to send the acknowledgement. Any such captured information is dealt with in the corresponding way as described above for additional information, and is stored in the database 131 for future reference.

Using a method and a system 100 according to this aspect of the invention, a particularly simple and flexible way of acknowledging information is achieved. Since a requesting party or the central server 130 may specify what is to be acknowledged, by designating a particular document, together with any particular requirements regarding identification, additional information and so on, it can be guaranteed that the information can be easily and unambiguously acknowledged, with sufficient security and traceability, on the fly by the relevant user. By beforehand defining what information must be acknowledged in what way in a particular project PR, for instance on the level of different types of work tasks rather than for individual work tasks, it can easily be guaranteed that particular well-defined information is produced as an integrated part of the execution of the project PR, since it is not possible to for instance delegate responsibility or finalizing particular work tasks without also providing additional information of a pre-specified type.

The principle of simply drawing a signature and storing the resulting image file will not provide the highest possible level of security. However, this is an important point of the present invention. By lowering the security standards, it is possible to instead achieve a system which is sufficiently secure for many purposes and still very user-friendly, simple and flexible.

### Third aspect

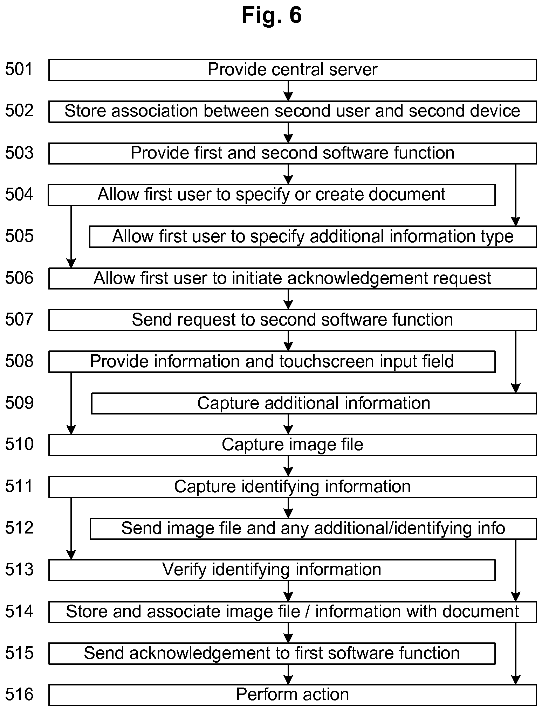

Figure 6 illustrates a method according to a third aspect of the present invention, for follow-up of a building or construction project, which is also performed by the system 100.

In a first step 601, similar to steps 401 and 501, above, the central server 130 is provided. In a step 602, the above described software function is provided. In steps 603 and 604, the project PR is associated with at least one sub project SP1, SP2, as described above, and each sub project SP1, SP2 is associated with at least one respective work task T11-T15, T21-T23, also as described above. These associations are preferably created in connection to project initiation, and are stored in the database 131.

In a step 605, the central server 130 is arranged to associate individual work tasks and/or individual sub projects with additional digitally stored documents, pertaining to the work task or sub project in question. Such information may, for instance, be produced by a system 100 operator, be fetched or linked from a third party information source such as server 140. The additional information is preferably stored, in digital format, or at least in the form of a link, in the database 131 during a project initiation phase, with the intention of forming a priori information as discussed above, which will form part of a final documentation of the project PR once finalized (see below).

Apart from any such a priori information, the central server 130 is arranged to, in a step 606, associate at least one work task, preferably most work tasks, most preferably substantially all work tasks, with at least one respective documentation requirement. Such documentation requirement pertains to dynamic documentation as discussed above, and the requirement is seen as fulfilled by the central server 130 when a respective digitally stored media file of a particular predetermined respective media type has been received by the central server 130 and associated with the work task in question. Hence, that a work task or a sub project is associated with such a documentation requirement means that the work task or sub project in question will not be allowed to be marked as finalized in the database 131 before the required documentation, in other words digitally stored documents of the prescribed media types, have been associated with the work task or sub project in question in the database 131. The media types may preferably be selected from the group comprising an image, a moving image and/or a sound, preferably with the additional requirement that the document is captured using hardware of the mobile device of a performer assigned as responsible for the work task or sub project in question.

According to one preferred embodiment, at least one work task is associated, in the database 131, with at least one digitally stored checklist which in turn comprises at least one documentation requirement of the said type for the work task in question. Hence, the work task in question may be associated with a number of requirements that must be met in order for the work task to be marked as finalized in the database 131, one or several of which may be a documentation requirement as described above.

Preferably, at least one such digitally stored checklist comprises at least one digitally stored binary confirmation parameter, indicating whether a particular work sub task has been performed or not. Such a binary confirmation parameter may be on the format "yes" or "no" regarding a specific work sub task, such as "layer of lacquer" for the work task T15 (above).

In a step 607, each work task is associated with at least one respective performer. This assigning step may be performed as described above, both in case assignments are made as a part of an initial project initiation step and in case assignments and reassignments may be made during project execution as described above in connection to figure 4.

Similarly, the central server 130 is arranged to associate individual sub projects SP1, SP2 with respective sub project responsible users.

According to a preferred embodiment, the central server 130 is arranged to associate at least one work task with a particular deadline in terms of a date or time at which the work task in question should be finalized. Then, in a step 608, the central server 130 monitors for passed deadlines, and in case the deadline passes for a particular work task without the work task in question having been marked as finalized in the database 131, the central server, in a step 609, provides a notification to a mobile device of the sub project responsible associated, in the database 131, with the sub project comprising the work task in question.

According to this third aspect of the present invention, the software function is arranged to allow the respective assigned performers to, using their respective mobile device, mark work tasks that they are assigned to by association in the database 131 as finalized. As a result of such marking, the software function is arranged to communicate to the central server 130 that the work task in question has been finalized. In order for such finalization to be acknowledged and entered into force by the central server 130, the said documentation requirement or the type described above for the work task in question must be met.

Preferably, in order to allow the performer in question to meet such documentation requirement, the software function is arranged, in a step 610 in connection to the said marking by the performer which is associated with the work task in question, to allow the performer in question, using his or her mobile device, to produce the said at least one digitally stored media file. This production may be made by allowing the performer to select a document which is digitally stored on the said mobile device or otherwise accessible from the said mobile device. However, it is preferred that the software function is arranged to allow the performer to produce the required at least one document using hardware of the mobile device in question, such as a built-in camera or microphone, in connection to making a request to finalize the work task in question. Then, the software function is arranged to communicate the produced document from the mobile device in question to the central server 130.

In particular, it is preferred that the software function is arranged to provide a, preferably interactive, GUI on a screen display 120a, 121a of the mobile device 120, 121 in question, which GUI is arranged to allow the performer in question to mark a particular work task as finalized, with which work task the performer is associated as responsible in the database 131. Preferably, the software function is arranged to allow the user to record the required media file via the same GUI and using a digital camera and/or a microphone of the mobile device in connection to said marking.

This is illustrated in figure 10a, in which performer P12 is assigned to work task T11 (see figure 2). P12 has finalized T11, and wishes to report this to the system 100. Then, P12 is provided with the IGUI illustrated in figure 10a, which, since T11 is associated in the database 131 with a documentation requirement of an image, provides an opportunity for P12 to activate the built-in camera of the mobile device of P12, by selecting "[capture]" in the IGUI, and thereupon taking a photo of the current state of the finalized work task T11. After the production of the resulting digitally stored image file, P12 can sign in the "Sign:" box (as described above in connection to figure 5), the file is sent by the software function to the central server in a step 611.

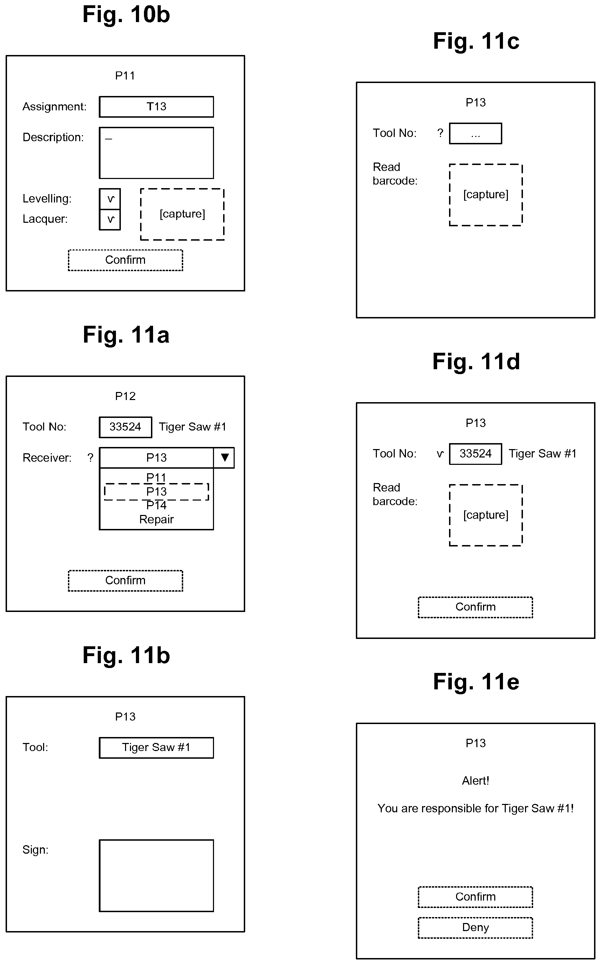

Figure 10b illustrates a further example IGUI, in which example the software function is arranged to allow a performer P11, using his or her mobile device, to, in addition to producing the digitally stored media file, set the value of a couple of particular binary confirmation parameters. In the example, the parameters are the T13 work task work sub tasks of "Levelling" and "Lacquer", which have been checked in the IGUI by P11 as illustrated by the checkmarks in figure 10b. Like in figure 10a, by pressing "[capture]", the user can invoke built-in mobile device hardware to capture an image, or any other digitally stored media file, such as a video or audio clip, depending on the documentation requirement defined for T13 in the database 131. It is noted that, in the example shown in figure 10b, a signature is not required for task T13. In fact, individual tasks and/or sub projects may be associated with such a signature requirement in the database 131 as an additional documentation requirement.

The confirmation parameters are then communicated in step 611 from the mobile device, by the software function, to the central server 130.

In addition thereto, according to a preferred embodiment the software function is arranged to automatically record a geographic location of the mobile device 120, 121, using geographic location sensing hardware, such as GPS signal sensing hardware 120b, 121b, of the mobile device in question, in connection to the recording of the media file. This recording may be similar to the one described above in connection to figure 5, step 511. The software function is arranged to communicate the recorded geographic location to the central server 130 together with the recorded media file.

According to this third aspect of the invention, the central server 130 is arranged to mark, in a step 613 and in the database 131, the work task in question as finalized not before all of the above said requirements have been fulfilled for the work task in question. Hence, if the performer P11 in the example illustrated in figure 10b presses "Confirm" after having taken a required photograph using the mobile device in question, but without first checking the "Levelling:" box, the central server 130 will not mark the task T13 as finalized in the database 131. P11 will receive this information, for instance, by the assigned work task T13 not being marked as finalized with an appropriate check mark in the IGUI shown by the software function to P11. Alternatively, the software function may be arranged not to allow P11 to press "Confirm" before all documentation requirements are met.

As a part of the verification performed by the central server 130 in step 612, the central server 130 may verify, depending on the documentation requirements associated in the database 131 with the work task in question, that a digitally stored media file has been received from the mobile device of the performer in question (but preferably not the actual contents of such image file); that all confirmation parameters have been appropriately set; the presence (and possibly the information contents) of any required location information; and the presence (but preferably not the actual contents of) a digitally store signature image file.

In a preferred embodiment, the central server 130 is arranged to, for instance as a part of the said project initiation phase, associate individual work tasks with one or more previous work tasks that need to be finalized before the work task in question is commenced. This information may form part of the definition of a gantt diagram view of the project PR, and is illustrated in figure 2 wherein T13 and T14 can be commenced only once T12 has been finalized; and T15 can be commenced only once T13 has been finalized. In case the work task that has been finalized by the central server 130 in step 613 has other work tasks that are dependent upon the finalization of the work task, the central system 130 is arranged, once the work task in question is marked as finalized in the central server 130, to provide, in a step 614, a notification to a mobile device of a performer associated with any work tasks that depend on the particular work task in this manner. A corresponding sub project and/or project responsible may also be automatically notified, in a similar way, when a particular work task has been finalized.

As can be seen in figure 6, after step 613 the method may reiterate to step 610, for finalization of other work tasks.

According to this third aspect of the invention, the central server 130 is arranged to, in a step 617 which is performed after a verification step 616, in turn similar to step 612, mark a certain sub project as finalized only once all work tasks comprised in the sub project in question have been marked as finalized in the central server 130. On the other hand, in case there are no particular documentation requirements on the sub project level for the sub project in question, the central server 130 is arranged to automatically mark a sub project as finalized as soon as all the work tasks of the sub project have been finalized. In case there are such sub project level documentation requirements, the sub project is finalized by the central server 130 as soon as both all the sub project work tasks have been finalized and the additional documentation requirements have been completed. Such sub project level documentation requirements may be fulfilled by an assigned sub project responsible performer using an IGUI provided on the mobile device of the performer in question, similar to the one illustrated in figures 10a or 10b. Hence, the sub project finalization in step 617 is similar to the work task finalization in step 613, but operating on the sub project level rather than the work task level. In case there are more project levels than three (project - sub project - work task), it is preferred that a corresponding mechanism is used for finalizing entities on each such level, such as sub sub projects.

According to a preferred embodiment, the central server 130 is arranged to, once a particular sub project has been marked as finalized in the database 131, automatically provide a digitally stored documentation of the sub project in question, comprising both the above described a priori and dynamic information. Hence, both the said digitally stored media files, produced by the respective users in connection to the finalization requests described above, and the additional documents specified for example by the central server 130 during the initiation phase constitute said sub project documentation. Furthermore, all such dynamic and a priori documents pertaining to the sub project itself and/or to individual work tasks comprised in the sub project form part of the said documentation.

Hence, the documentation for a particular sub project is dynamically created during project execution, from a basis of existing priori information associated with sub projects and/or individual work tasks and with incremental additions of dynamically produced information in connection to the finalization of individual work tasks. Since documentation requirements are centrally defined ahead of time, a complete final documentation of a specified format can be guaranteed at the same time as the responsibility for creating many parts of the documentation can be delegated, even to performers that are unknown to a project manager at the time of planning and initiating the project.

Figure 3 illustrates conceptually the structure of the final documentation, comprising documents D1-D11. It is realized that each document D1-D11 may comprise several sub parts, among which both a priori and dynamic sub parts may be present. Since the logical structure of the documentation is a tree structure which closely follows the tree structure of the whole project (as illustrated in figure 3), a useful documentation structure is also automatically provided. Based upon the documentation tree illustrated in figure 3, it is easy to produce for instance a printed documentation with a table of contents.

The corresponding documentation can advantageously be applied to all sub projects SP1, SP2 in the project PR, and also to the project PR itself. Hence, the project PR may also be associated with certain documentation requirements, such as a final overall quality acknowledgement issued by the performer P1 using his or her mobile device before the project PR can be marked in the database 131 as finalized.

According to a preferred embodiment, the central server 130 is arranged to automatically provide the said digitally stored documentation for at least particular sub projects SP1, SP2, preferably for the entire project PR, even before all sub projects have been finalized. Such provision of the final documentation may take place via the software function and the respective mobile device of each user of the system 100, and hence in general relates to unfinished documentation. In this case, it is preferred that the central server 130 is arranged not to allow any such documentation associated with finalized work tasks or finalized sub projects to be modified, but to allow documentation associated with not yet finalized work tasks or sub projects to be modified. The access rights to such modification may be individually set in the database 131 during the said project initiation phase.

In other words, once a sub project of work task has been finalized, its documentation is preferably freezed and can no longer be changed. Before this point, its documentation may be possible to change, such as replacing a previously provided photograph of the finished work task, or with regards to a priori documentation.

Hence, in a preferred step 615, as a consequence of the finalization in step 613, the access rights of the documentation pertaining to the work task in question are automatically updated by the central server 130 in the database 131, so that the work task documentation is freezed.

In particular, according to this exemplifying embodiment and for at least one work task, the software function is arranged to allow performers of the work task to edit the digitally stored documents associated with the work task in question, so that for instance, in the example illustrated in figure 10a, a photo can be captured, sent to the central server 130 without signing, and later be replaced by a new capture photo which is made final by entering a signature in the "Sign:" field in the IGUI. Once the work task in question has been marked as finalized, the software function is then arranged to no longer allow any further editing of these documents by the performers of the work task.

A system and a method according to this third aspect of the present invention, in particular in combination with a delegation methodology according to the said first aspect of the invention for assigning responsibility for various sub projects and work tasks, and/or a signature provision methodology according to the said second aspect of the invention for providing acknowledgement that specific work tasks have actually been finalized, provides a way to initiate and execute a building or construction project in a very distributed and flexible way, but with strong central control over the scope, planning and progress of the project. Also, as soon as the project is finalized, a complete documentation, according to a previously established definition, is instantaneously available to interested parties with highly relevant content. Such documentation may even be accessed and used during the execution of the project before project finalization.

According to a particularly preferred embodiment, the above described definitions, in terms of work task descriptions, work task and sub project documentation requirements, and so forth, are preferably determined for the project during said project initiation phase based upon one or several predetermined sub project- and work task definition templates that may be selected into the project definition and then changed if needed.

Hence, in this case the central server 130 is arranged to initiate a sub project based upon a particular digitally stored sub project template, whereby said template comprises a particular set of work tasks and a particular set of dependencies between said work tasks. Then, a project manager or project responsible performer P1 is allowed to initiate a new sub project for a particular project by specifying a sub project template, perform any modifications and then instruct the central server 130 to automatically create the sub project as well as corresponding work tasks and all documentation requirements for all of said work tasks.

This process can be performed using a suitable IGUI provided by the central server 130 to the computer 123, or by the software function to the mobile device of the user in question.

### Fourth aspect

In a fourth aspect of the invention, a method is provided for tracking of work tools used in a building or construction project, which method is also performed using the system 100.

In this case, the database 131 comprises identifying information concerning a plurality of tools used in the project, such as electrically, pneumatically or manually driven hand tools, machinery, etc. The tools must be portable in the sense that they can be physically delivered from one performer to another, and are preferably handheld tools. On the other hand, they may also be larger machines, such as trucks.

In a step 701, which is similar to steps 401, 501 and 601, the central server 130 is provided. In a step 702, the above described software is provided.

In a step 703, the said tools are each associated with unque identifying information of some type, such as serial numbers or names, which identifying information is stored in the database 131.

In a step 704, each individual tool used in the system 100 and according to this fourth aspect of the present invention is associated with at most one particular performer. This association is made by the central server 130 and is stored in the database 131. Typically, some tools may be associated with a particular performer already from the outset of the project PR. However, many or most tools will be associated with a particular performer as a result of a checking out process or the like, from a tool warehouse or similar, once the performer in question needs the tool in question for performing a particular work task in the project PR. Each tool can preferably never be associated in the database 131 with more than one performer. In other words, there is always at the most one performer who has responsibility for a particular tool.

In the following, a performer being associated with a particular tool and who is about to deliver the tool, and therefore also the responsibility for the tool, will be called a "delivering performer". A performer who is about to accept the tool and assume responsibility therefore is called a "receiving performer".

According to one preferred embodiment, the central server 130 is arranged to periodically notify, in a step 705, each performer who is associated with at least one tool of the fact that such association exists in the central server 130. Such notification may take place by, for instance, a popup dialog appearing on the screen 120a, 121a of a mobile device 120, 121 of the performer in question, which popup is produced by the above discussed software function on the initiative of the central server 130. The notification may be sent, for instance, daily or weekly, and may require an acknowledgement of the performer receiving the notification, such as by the performer in question having to produce a signature image on his or her mobile device in a way similar to the above described.

According to this third aspect of the present invention, the delivery of a tool from a delivering performer to a receiving performer can be registered with the central server 130 in a safe yet simple, distributed and flexible manner.

According to one preferred embodiment, the delivering performer may send, via an IGUI provided by the software function on his or her mobile device, a request that a tool is delivered to a particular receiving performer. Such request is preferably sent to the central server 130, which as a consequence thereof sends a confirmation request to the receiving performer.

According to a preferred embodiment, the delivering performer is not required to identify him- or herself in connection to the said request. This means that the delivering performer is not required to produce any proof of his or her identity in connection to making the said request, not counting the fact that the delivering performer uses his or her mobile device to make the request.

It is furthermore preferred that the software function is arranged to allow the delivering performer to identify a tool, which preferably is associated with the delivering performer in the database 131, and to send a message to the mobile device 120, 121 of the receiving performer comprising an identification of said tool, preferably by the software function communicating the information to the central server 130, in turn communicating the information further to the mobile device of the receiving user.

Figure 11a illustrates an IGUI screen shot, wherein a delivering performer P12, who has currently ownership of a tiger saw tool with system-unique serial number 33524 and system name "Tiger Saw #1", is allowed by the software function providing the said IGUI to identify the tool in question by allowing the delivering performer, via the said IGUI provided on the screen display of his or her mobile device, to enter the unique code 33524 of the tool in a text field control. Alternatively, the delivering performer P12 could, for instance, select the tool from a list, such as a list of all or a general subset of tools in the system, or a list of all tools currently being associated with the performer P12 in the database 131 which information is provided to the software function by the central server 130. In other embodiments, the tool is automatically identified by the software function by automatically reading a graphical code, such as a bar- or QR code, or a printed alphanumerical string, on the tool using a built-in camera of the mobile device in question.

Figure 11a also illustrates that the delivering performer may be allowed, by the IGUI, to identify a receiving performer, such as via a drop-down list. In the illustrated example, performer P13 has been selected as the receiving performer.

In a preferred step 706, the delivering performer is allowed to initiate the transfer of responsibility of the identified tool in question, preferably using the said IGUI, such as by pressing "Confirm" in figure 11a. This will preferably trigger a communication by the software function to the central server 130 of the transfer request, which in turn will trigger a communication from the central server 130 to the software function automatically making available an IGUI on the mobile device of the receiving performer. In this case, the receiving performer P13 obtains an IGUI screen such as the one illustrated in figure 11b.

Then, according to a preferred embodiment, the software function is arranged, in a step 707, to require the said receiving performer to identify him- or herself before sending said acknowledgement. Such identification may take place in a way which is similar to the one illustrated in figure 9b, in which a username/password is supplied for verification by the central server 130.

However, it is preferred that said identification is performed based upon the possession by the receiving user of the respective mobile device in question, and the above described previously stored association in the central server 130 between the mobile device in question and the receiving performer. In this case, the identification is automatically performed by the software function and/or the central server 130 by identifying the particular mobile device that is used to send the acknowledgement.

According to this fourth aspect of the invention, the software function is arranged to allow the receiving performer, who is at this point not associated with the tool in question in the database 131, using the mobile device of the receiving performer, to, in a step 707, electronically transfer an acknowledgement to the central server 130 of the reception of the tool in question by the receiving performer.

In the example shown in figure 11b, performer P13 will assume responsibility of the tool Tiger Saw #1. According to a preferred embodiment, the software function is arranged to, in connection to the said identification of the received tool, allow the receiving performer to draw a signature on a touchscreen of said respective mobile device and to record the signature as an image file, and in that the said acknowledgement comprises the recorded image file. Hence, a signature image is created by the receiving performer using the IGUI provided by the software function on his or her mobile device, as described above in connection to figure 5. In this case, when the receiving performer has signed in the box "Sign:" in figure 11b, and the signature image has been communicated to the central server 130, the acknowledgement is considered finished. Then, the signature image is then preferably merely stored in the database 131 for future reference, and is hence preferably not subjected to any verifying analysis, such as described above.

According to a particularly preferred embodiment, no other proof of acknowledgement is required from the receiving user by the central server 130 than the said signature image file.

In a preferred embodiment, illustrated in figure 11c, the receiving performer P13 first, in a step 708, identifies the received tool in question before sending said acknowledgement to the central server 130. This identification takes place via the said IGUI, and for instance involves, such as illustrated in figure 11c, the user specifying a unique code related to the tool, such as printed on the tool in question. This specification may take place by the user entering such a code directly, or in other ways, such as by automatic detection of a bar- or QR code using the built-in camera of the mobile device, as described above. In figure 11c, by pressing "[capture]", the user activates a built-in camera of the mobile device, which in turn captures an image which is analyzed using image analysis techniques that are conventional as such to automatically detect a bar- or QR code which is physically printed on the tool in question. Figure 11d shows the resulting screen of the IGUI after the detection has been performed. The checkmark indicates successful identification of the tool with code 33524, namely the "Tiger Saw #1".

By pressing "[capture]" again, the performer P13 can identify another tool. By pressing "Confirm", the performer instructs the software function to send the acknowledgement. It is noted that in the example illustrated in figures 11c and 11d, no signature is required, even if it is realized that this could very well be the case depending on the configuration of the system 100.

Hence, in a step 709, the software function is arranged to allow the user, via said IGUI, to acknowledge the reception of the tool in question.

As described above, each performer is preferably associated, in the database 131, with one or several particular profiles PR1-PR4. According to a preferred embodiment, each one of a set of available profiles PR1-PR4 in the project PR is furthermore associated, in the database 131, with zero or more tool categories. Such tool category typically pertains to an area of use, so that a particular tool category is associated, in the database 131, with one or several performer profiles. For instance, the tool "Tiger Say #1" belongs to a tool category "demolition", which in turn is associated with or maps to at least one performer profile of performer P13. A screwdriver may be associated with a tool category "general", which in turn maps onto all performer profiles, and hence can be used by all performers. Hence, each tool which is registered for use in the project and administered by the system 100 is associated, in the database 131, with at least one tool category.

Then, in a preferred step 710, the central server 130 is arranged to verify that the performer's profile(s) match the tool's profile(s), and not to erase an association between a particular tool and a certain delivering performer in case the receiving performer is not associated with a profile in turn associated with the tool category of the tool in question.

Furthermore, the central server 130 is arranged to, also in step 710, verify the validity of the request sent in step 709, and not to erase such an association between a particular tool and a certain delivering performer who is presently associated with the tool in question in the database 131 as a reaction to a request from the delivering performer in question, in case such request does not comprise an acknowledgement of the said type.

However, if the verification(s) in step 710 turn out in the positive, the central server 130 is arranged to, as a result of the receipt of the above described acknowledgement, associate the tool with the receiving performer and thereby to erase a previously existing association between the particular tool and the delivering performer.

As a result, the responsibility for the tool in question passes to the receiving performer and the receiving performer is associated, in the database 131, with the tool in question as its responsible performer. This will result in the IGUI screen illustrated in figure 11e, in which the receiving performer P13 is duly notified. In case no signature was required in the acknowledgement itself (above), a possibility such as the one shown in figure 11e, in which P13 can press a "Confirm" button in order to send a confirmation of the reception of the tool responsibility, can be presented to the receiving performer P13. In case "Deny" is pressed, the responsibility is preferably reversed, so that the delivering user still is associated with the tool in question.

According to a preferred embodiment, illustrated in figure 11a, a particular receiving user ("Repair") is a receiver of broken tools, in the form of a recycling, service or repair station, or the like. Then, the software function is arranged to allow delivering performers to notify the central server 130 that a particular tool, with which the performer in question is currently associated in the database 131, is broken or needs service by delivering the tool to the said particular receiving user. The "Repair" account preferably is served by an automatic algorithm, such as executed by the central server 130 and which, after any relevant checks regarding information integrity and the like, automatically accepts the delivery of the broken tool, whereby the tool is associated with a "repair mode" or the similar in the database and not with any particular performer, and after which the delivering performer can physically deliver the tool to the repair workshop or any other real life manifestation of the "Repair" user. Alternatively, the "Repair" user is used by a physical, third-party repair shop, or the like, which also uses the system 100 via an own mobile device and the software function.

Using a method and a system 100 according to this fourth aspect, a simple, distributed and flexible way of handling tool responsibility is achieved, while still keeping real-time central control over the whereabouts and responsibility of tools used in the project PR.

There are several different alternative ways of providing the fourth aspect. In one example, the delivering performer needs not do anything. Instead, the receiving performer identifies the tool using the camera of his mobile device, signs on the screen of the same mobile device and thereby is automatically registered in the database 131 as the responsible for the tool in question. In another example, it is the delivering performer who takes the initiative, identifying both the tool in question and the receiving user. The receiving user may then only have to press a "confirm" button on the screen of his or her mobile device to execute the reassignment of the tool responsibility. Hence, for different tools and/or different situations, the system can be preconfigured to require more or less of the delivering and receiving performers, respectively. The performers may also, on the other hand, be left selecting a suitable way of handing over responsibility for each particular situation. Since there is always some kind of acknowledgement by the receiving performer, in all these cases central control is enforced even when offering very flexible solutions to the performers using the tools in the field.

Above, preferred embodiments have been described. However, it will be apparent to the skilled person that many modifications may be made to the described embodiments without departing from the basic idea of the invention.

In general, the four aspects described above can be used in one and the same system, and features described in relation to one aspect can freely be used in another aspect, as applicable.

One example of this is that the signature functionality described in the second aspect can be used in any situation in which a performer needs to acknowledge something. This has been exemplified in the case of work task delegation, in the first aspect; work task finalization, in the third aspect; and tool responsibility delegation, in the fourth aspect. However, there are many more situations in which such an acknowledgement is needed, such as for personal time and illness reporting; specific acknowledgments of important work task sub parts, such as double-checking electrical wiring; and general error reporting, not associated with any particular work task or tool.

Another example is that when responsibility for a particular work task is assigned to a particular performer, the database may comprise preconfigured information regarding a certain set of tools needed to perform the said work task. Then, when signing his or her mobile device screen to acknowledge the responsibility for the work task, the performer may also, using the same signature, acknowledge the responsibility for the said set of tools.

Moreover, the software function described herein may actually be one and the same software function, but be arranged to expose and make available several different sets of functionality depending on the user that is using the mobile device used by the software function. For instance, a supplier may have only a read-only access to project information. For this reason and others, it is preferred that each user of the software function needs to log in to the system using the respective mobile device, in a way which is conventional as such, for instance using a username/password pair.

The first and second software functions described above may be alike, so that for instance the first software function and the second software function may both be arranged to allow a user to request that another user acknowledges the information content of a particular document, as well as to allow such other user to acknowledge the document in question, as described above.

Apart from the above described embodiments in which a signature image file is used to acknowledge the information content of particular document, such a signature may also be used for the acknowledgment of general communication messages. For instance, a performer may apply for a particular vacation by sending a project responsible performer a direct message, which is signed by the responsible performer in question and thereby acknowledged as received or even granted. The signature image file is stored in the database 131 as described above for future reference.

Thus, the invention shall not be limited to the above described embodiments, but rather be variable within the scope of the enclosed claims.

It is realized that the software function described above can be embodied in a software product which is storable on physical storage media, such as a computer memory, and can be installed and run from a general-purpose computer, such as the central server or a particular mobile device.

## Claims

1. System (100) for follow-up of a building or construction project (PR), which project comprises at least one sub project (SP1,SP2), which sub projects each comprises at least one work task (T11-T15,T21-T23), which system comprises a database (131) and a central server (130) arranged to communicate with several electronic mobile devices (120,121), which system furthermore comprises a software function arranged to be accessed from a respective one of said mobile devices by a respective performer (P1,P11-P14,P21-P23) controlling the respective mobile device in question and arranged to provide a graphical user interface on a screen display (120a,121a) of the mobile device in question, wherein the central server is arranged to, in said database, associate the project with said sub projects, each of said sub projects to said work tasks and each of said work tasks with at least one particular respective performer, wherein the software function is arranged to allow the respective performer to, using the respective mobile device, mark work tasks associated with the performer in question as finalized, whereby said software function is arranged to communicate to the central server that the work task in question is finalized, wherein the central server is further arranged to, in said database, associate various assignment rights to different performers, wherein the central server is arranged to electronically receive assignment requests from respective software functions of respective mobile devices controlled by individual ones of said performers and in reply to such requests, firstly, verify if the requesting performer has proper assignment rights and, secondly, associate, in said database, a certain respective sub project and/or a certain respective work task with a certain respective performer, as specified in said request, **characterised in that** the central server is further arranged to, following an assignment request concerning a particular first performer and a particular sub project comprising at least one work task, automatically change the assignment rights in said database for the first performer so that the first performer obtains the right to in turn assign, by subsequent assignment requests to the central server performed using the graphical user interface of the respective mobile device of the first performer and said software function, work tasks comprised in the sub project in question to other performers, **in that** the software function is arranged to, upon said change of assignment rights, automatically provide the graphical user interface of the first performer with controls for assigning sad work tasks comprised in the sub project in question to other performers, **in that** the central server is further arranged to associate, in said database, at least one work task with at least one documentation requirement in the form of a particular required digital media type, **in that** the graphical user interface is arranged to allow the assigned performer in question to mark a particular assigned work task as finalized and to record said media file, using a digital camera and/or a microphone of the mobile device in connection to said marking of the work task in question, and to communicate it to the central server, and **in that** the central server is arranged to, automatically and dynamically create, update and electronically provide a digitally stored documentation of the sub project in question comprising said digitally stored media files pertaining to the sub project itself and/or to work tasks comprised in the sub project.

2. System (100) according to claim 1, **characterised in that** the software function of the assigned performer is arranged to provide, in the graphical user interface used by the assigned performed in question, a field wherein the assigned performer graphically can draw a signature, so that a digitally stored signature image is created comprising the said drawn signature, **in that** said software function is further arranged to send said signature image to the central server, the said signature image not being a part of the said media file, and **in that** the central server is arranged to associate the signature image to the document and to store them both in digital format in the database.

3. System (100) according to claim 2, **characterised in that** the software function is arranged to, in connection to said signing, allow the assigned performer to identify him- or herself before sending the signature image, using a mobile device (120,121) of the assigned performer.

4. System (100) according to any one of the preceding claims, **character-ised in** that the central server (130) is arranged to associate, in the database (131), individual work tasks and/or individual sub projects with additional digitally stored documents pertaining to the work task or sub project in question, in that the central server is arranged to, automatically and dynamically create, update and electronically provide a digitally stored documentation of the sub project comprising both said digitally stored media files and the additional documents pertaining to the sub project itself and/or to work tasks comprised in the sub project.

5. System (100) according to claim 4, **characterised in that** the central server (130) is further connected to a third party server (140), from which the server obtains said additional documents.

6. System (100) according to any one of the preceding claims, **characterised in that in that** the central server (130) is arranged to dynamically update and electronically provide, via said software function, said digitally stored documentation for the entire project even before all sub projects have been finalized, by the central server allowing said assigned performer, using the mobile device and said software function, to produce an updated version of said at least one digitally stored media file and to communicate it to the central server thereby modifying documentation associated with not yet finalized work tasks or sub projects, but not allowing the assigned performer to modify any documentation associated with already finalized work tasks or finalized sub projects by the central server automatically updating access rights of the documentation pertaining to the work tasks in question in the database.

7. System (100) according to any one of the preceding claims, **characterised in that** the central server (130) furthermore is arranged to continuously make available updated contact information for the performers assigned to the work tasks comprised in the project.

8. System (100) according to any one of the preceding claims, **characterised in that** the central server (130) is arranged to, in response to a received assignment request comprising a certain performer (P1,P11-P14,P21-P23), cause said software function to allow the certain performer to send an acknowledgement of the assignment in question to the central server, using a respective mobile device (120,121), and **in that** the central server is arranged not to associate the performer in question with the work task (T11-T15;T21-T23) in question before such an acknowledgement has been received by the central server.

9. System (100) according to any one of the preceding claims, **characterised in that** the central server (130) is arranged to associate individual work tasks (T11-T15,T21-T23) with one or more previous work tasks that need to be finalized before the work task in question is commenced, and **in that** the central server is arranged, once a particular work task is marked as finalized, to provide a notification to a mobile device (120,121) of a performer (P1,P11-P14,P21-P23) associated with any work tasks that depend on the particular work task in this manner.

10. System (100) according to any one of the preceding claims, **characterised in that** the central server (130) is arranged to initiate a sub project (SP1,SP2) based upon a particular digitally stored sub project template, **in that** said template comprises a particular set of work tasks (T11-T15,T21-T23) and a particular set of dependencies between said work tasks, and **in that** a project manager is allowed to initiate a new sub project for a particular project (PR) by specifying a sub project template, perform any modifications and then instruct the central server to automatically create the sub project as well as corresponding work tasks and all documentation requirements for all of said work tasks.

11. System (100) according to any one of the preceding claims, **characterised in that** at least one work task (T11-T15,T21-T23) is associated, in the central server (130), with at least one digitally stored checklist, in turn comprising at least said documentation requirement for the work task in question.

12. System (100) according to claim 11, **characterised in that** at least one digitally stored checklist also comprises at least one digitally stored binary confirmation parameter, which indicates whether a particular work sub task has been performed or not, **in that** the software function is arranged to allow the performer (P1,P11-P14,P21-P23), using the mobile device, to set the value of the confirmation parameter and to communicate it to the central server (130), **in that** the central server is arranged to mark the work task (T11-T15,T21-T23) in question as finalized not before all confirmation parameters have been set to "yes" for the work task in question.

13. System (100) according to any one of the preceding claims, **characterised in that**, for at least one work task (T11-T15,T21-T23), the software function is arranged to allow performers (P1,P11-P14,P21-P23) of the work task to edit the digitally stored documents associated with the work task in question, and **in that**, once the work task has been marked as finalized, the software function is arranged to no longer allow any further editing of these documents by the performers of the work task.

14. System (100) according to any one of the preceding claims, **characterised in that** the central server (130) is arranged to notify said assigned performer as to the amended assignment rights associated with said assigned performer P1, which notification is provided to a mobile device (120,121) of the assigned performer and displayed on a screen (120a,121a) thereof by said software function.
